Europäisches Patentamt

European Patent Office

Office européen des brevets

(19)

(11) Veröffentlichungsnummer: **0 178 407**
**B1**

(12) # EUROPÄISCHE PATENTSCHRIFT

(45) Veröffentlichungstag der Patentschrift:
**22.03.89**

(51) Int. Cl.⁴: **B 60 Q 1/04**

(21) Anmeldenummer: **85109798.0**

(22) Anmeldetag: **05.08.85**

(54) **Projektionsscheinwerfer für Kraftfahrzeuge.**

(30) Priorität: **17.09.84 DE 8427338 U**

(43) Veröffentlichungstag der Anmeldung:
**23.04.86 Patentblatt 86/17**

(45) Bekanntmachung des Hinweises auf die Patenterteilung:
**22.03.89 Patentblatt 89/12**

(84) Benannte Vertragsstaaten:
**DE FR GB IT**

(56) Entgegenhaltungen:
**DE-A- 2 728 755**
**DE-A- 2 754 315**

**PATENT ABSTRACTS OF JAPAN, Band 8, Nr. 73
(M-287)[1510], 5. April 1984; & JP - A - 58 218 440
(NISSAN JIDOSHA) 19.12.1983**

(73) Patentinhaber: **Dr.Ing.h.c. F. Porsche
Aktiengesellschaft, Porschestrasse 42,
D-7000 Stuttgart 40 (DE)**

(72) Erfinder: **Moebius, Wolfgang, Holdergasse 26,
D-7141 Schwieberdingen (DE)**

EP 0 178 407 B1

# Beschreibung

Die Neuerung bezieht sich auf einen Projektionsscheinwerfer für Kraftfahrzeuge, der von einer Öffnung eines Aufbaus umgeben ist.

Scheinwerfer, die nach dem Projektionsprinzip arbeiten, weisen eine im Durchmesser relativ kleine Projektionslinse auf und erzeugen einen stark gebündelten Lichtstrahl. Dadurch ist die Lichtaustrittsfläche am Aufbau gegenüber üblichen Scheinwerfern wesentlich kleiner.

Aufgabe der Neuerung ist es, am Aufbau eines mit Projektionsscheinwerfern ausgerüsteten Kraftfahrzeuges solche Vorkehrungen zu treffen, dass am Aufbau eine Scheinwerferform üblicher Grösse erkennbar ist, gleichzeitig aber die Projektionslinse dieser Scheinwerferart ohne ihre Funktion zu beeinträchtigen, abgedeckt ist.

Neuerungsgemäss wird diese Aufgabe durch die kennzeichnenden Merkmale des Anspruchs 1 gelöst. Weitere, die Neuerung ausgestaltende Merkmale sind in den Unteransprüchen enthalten.

Die mit der Neuerung hauptsächlich erzielten Vorteile sind darin zu sehen, dass die Abdeckung das Erscheinungsbild eines üblichen Scheinwerfers verkörpert, wobei die Beschichtung die Projektionslinse – ohne Funktionsbeeinträchtigung – verkleidet. Durch Form und Grösse des Luftaustrittsbereichs und auch durch eine definierte Lichtdurchlässigkeit an der Beschichtung ist eine gewünschte Streuwirkung des Projektionsscheinwerfers an der Abdeckung realisierbar.

In der Zeichnung werden Ausführungsbeispiele der Neuerung gezeigt, die nachstehend näher beschrieben sind.

Es zeigt

Fig. 1 einen Längsschnitt eines Kraftfahrzeuges im Bereich eines Scheinwerfers mit der Abdeckung nach der Neuerung,

Fig. 2 eine Schrägansicht des Scheinwerfers,

Fig. 3 eine Ansicht entsprechend Fig. 2 mit einer weiteren Ausführungsform.

Ein Projektionsscheinwerfer 1 ist einem Gehäuse 2 zugeordnet, das in eine Öffnung 3 eines Aufbaus 4 eines nicht näher dargestellten Kraftfahrzeuges eingesetzt ist. Der Projektionsscheinwerfer 1 umfasst eine Projektionslinse 5, und er ist mittels einer Abdeckung 6 verkleidet.

Die ovalförmige Abdeckung 6, bildet mit dem Gehäuse 2 eine Einheit 7, die unter Vermittlung elastischer Dichtungen 8, 9 zusammengesetzt ist. Die Einheit 7 wird von einem, die Öffnung 3 begrenzenden Aufnahmerahmen 10 getragen, wobei zwischen Aufnahmerahmen 10 und Einheit 7 ebenfalls Dichtungen 11, 12 vorgesehen sind. Ein Rand 13 der Abdeckung 6 schliesst in etwa bündig mit der Aussenhautkontur 14 des Aufbaus 4 ab.

Die Abdeckung 6, die aus Glas, visiblem Kunststoff oder dergleichen besteht, weist die Form einer konkaven Scheibe auf, deren Durchmesser deutlich grösser ist als derjenige der Projektionslinse 5. Dabei ist die Abdeckung 6 ausserhalb eines Lichtdurchtrittsbereichs A mit einer kolorierten, vorzugsweise schwarzen Beschichtung 15 versehen.

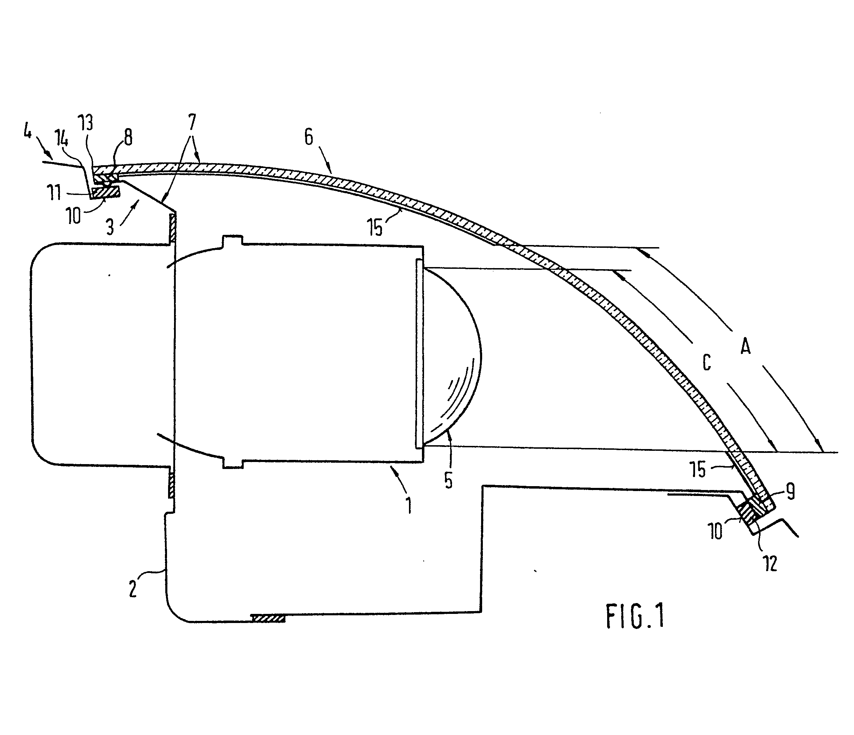

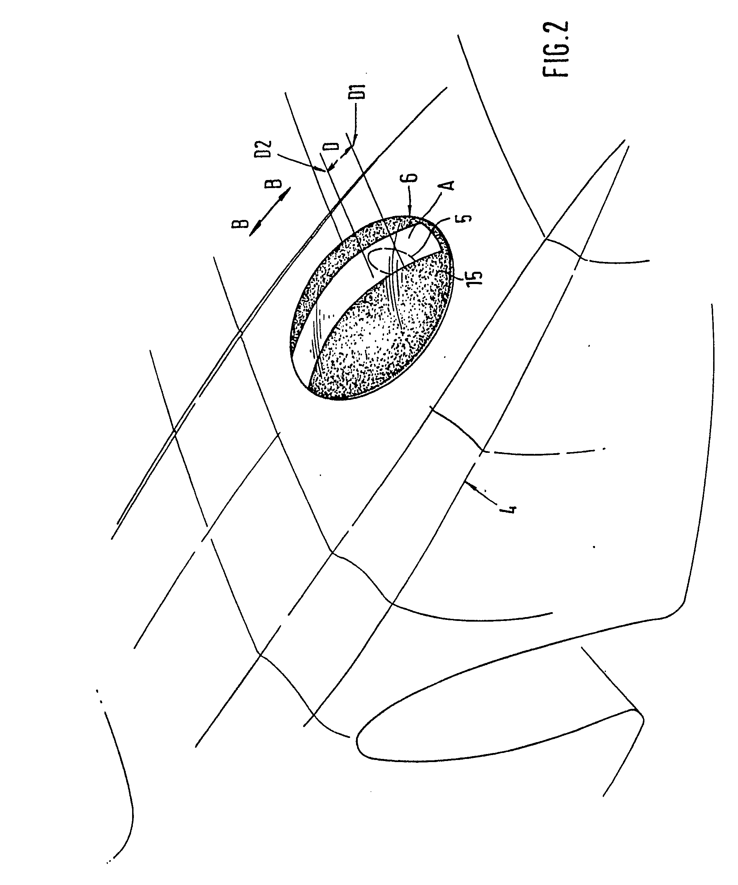

Nach Fig. 2 weist der Luftdurchtrittsbereich A die Form eines sich in Fahrzeuglängsrichtung B–B erstreckenden Rechtecks auf, wobei der Lichtdurchtrittsbereich A zur Erzeugung einer Streuwirkung grösser ist als die durch die Projektionslinse 4 gebildete Lichtaustrittsfläche C (Fig. 1). Die Beschichtung 15 kann dabei so gestaltet sein, dass ihre Lichtdurchlässigkeit bereichsweise – wie bei D dargestellt – unterschiedlich ist, d.h., bei D1 ist sie grösser als bei D2.

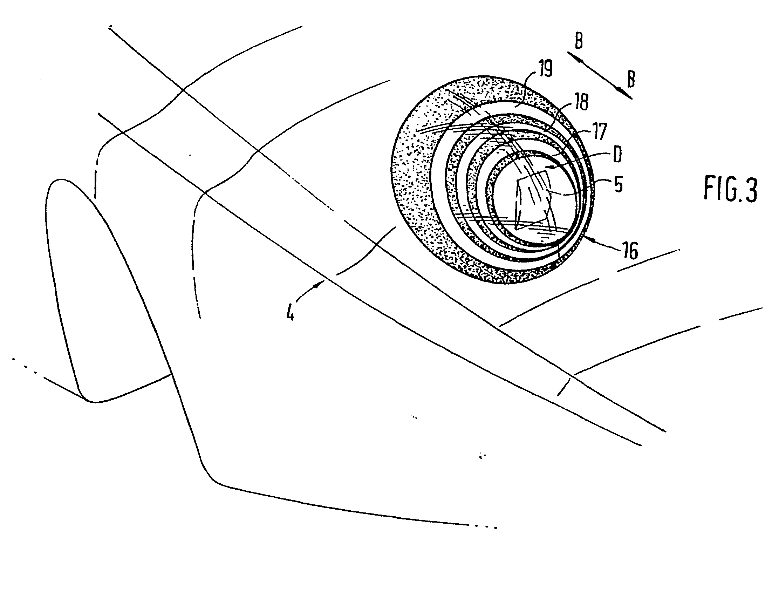

In Fig. 3 weist die Abdeckung 16 einen ovalen Lichtdurchtrittsbereich D auf, der von mehreren ovalen, durchsichtigen Ringen 17, 18 umgeben ist. Durch letztere wird Streulicht erzielt.

## Patentansprüche

1. Projektionsscheinwerfer für Kraftfahrzeuge, der von einer Öffnung eines Aufbaus umgeben ist, dadurch gekennzeichnet, dass der Projektionsscheinwerfer (1) mittels einer scheibenförmigen Abdeckung (6, 16) verkleidet ist, die einen grösseren Durchmesser als eine Projektionslinse (5) des Projektionsscheinwerfers (1) aufweist und ausserhalb eines Streulicht bewirkenden Lichtdurchtrittsbereichs (A; D) mit einer kolorierten Beschichtung (15) versehen ist.

2. Projektionsscheinwerfer nach Anspruch 1, dadurch gekennzeichnet, dass der Lichtdurchtrittsbereich (A) die Form eines Rechtecks aufweist.

3. Projektionsscheinwerfer nach Anspruch 1, dadurch gekennzeichnet, dass der Lichtdurchtrittsbereich (D) eine ovale Form umfasst.

4. Projektionsscheinwerfer nach Anspruch 3, dadurch gekennzeichnet, dass der Lichtdurchtrittsbereich (D) von mehreren ovalen, durchsichtigen Ringen (17, 18, 19) umgeben ist.

5. Projektionsscheinwerfer nach einem oder mehreren der vorangehenden Ansprüche, dadurch gekennzeichnet, dass die Lichtdurchlässigkeit der Beschichtung (15) bereichsweise unterschiedlich ist.

6. Projektionsscheinwerfer nach Anspruch 1, dadurch gekennzeichnet, dass die Abdeckung (6, 16) eine konkave Form aufweist.

7. Projektionsscheinwerfer nach den Ansprüchen 1 und 6, dadurch gekennzeichnet, dass die Abdeckung (6; 16) bündig mit der Aussenkontur (14) des Aufbaus (4) abschliesst.

8. Projektionsscheinwerfer nach Anspruch 1, dadurch gekennzeichnet, dass die Abdeckung (6; 16) und ein den Projektionsscheinwerfer (1) tragendes Gehäuse (2) eine Einheit (17) bilden und in einen Aufnahmerahmen (10) des Aufbaus eingesetzt sind.

## Revendications

1. Phare pour véhicules automobiles, entouré d'une ouverture dans la carrosserie, caractérisé en ce que le phare (1) est habillé au moyen d'un revêtement (6, 16) en forme de disque, qui présente un diamètre plus important qu'une lentille de projection (5) du phare (1) et est pourvu à l'extérieur d'une zone de passage de la lumière (A; D) provoquant une lumière diffusée, avec un revêtement coloré (15).

2. Phare selon la revendication 1, caractérisé en ce que la zone de passage de la lumière (A) présente la forme d'un rectangle.

3. Phare selon la revendication 1, caractérisé en ce que la zone de passage de la lumière (D) prend une forme ovale.

4. Phare selon la revendication 3, caractérisé en ce que la zone de passage de la lumière (D) est entourée de plusieurs anneaux ovales transparents (17, 18, 19).

5. Phare selon une ou plusieurs des revendications précédentes, caractérisé en ce que la transparence du revêtement (15) est variable selon les zones.

6. Phare selon la revendication 1, caractérisé en ce que le revêtement (6; 16) présente une forme concave.

7. Phare selon les revendications 1 et 6, caractérisé en ce que le revêtement (6; 16) constitue la limite approximativement affleurée sur le contour de revêtement extérieur (14) de la carrosserie (4).

8. Phare selon la revendication 1, caractérisé en ce que le revêtement (6; 16) et un carter (2) portant le phare (1) forment une unité (17) et sont introduits dans un cadre de réception (10) de la carrosserie.

**Claims**

1. Projecting headlight for motor vehicles, which is surrounded by an opening in a vehicle body, characterised in that the projecting headlight (1) is masked by means of a disc-shaped covering (6, 16) which has a larger diameter than a projecting lens (5) of the projecting headlight (1) and is provided with a coloured coating (15) outside a light-transmitting region (A; D) producing scattered light.

2. Projecting headlight according to Claim 1, characterised in that the light-transmitting region (A) has the shape of a rectangle.

3. Projecting headlight according to Claim 1, characterised in that the light-transmitting region (D) has an oval shape.

4. Projecting headlight according to Claim 3, characterised in that the light-transmitting region (D) is surrounded by a plurality of oval, transparent rings (17, 18, 19).

5. Projecting headlight according to one or more of the preceding claims, characterised in that the translucency of the coating (15) varies regionally.

6. Projecting headlight according to Claim 1, characterised in that the covering (6, 16) has a concave shape.

7. Projecting headlight according to Claim 1 and 6, characterised in that the covering (6; 16) forms a closure flush with the outer line (14) of the vehicle body (4).

8. Projecting headlight according to Claim 1, characterised in that the covering (6; 16) and a housing (2) supporting the projecting headlight (1) form a unit (7) and are set in a receiving frame (10) of the vehicle body.

FIG.1

1/3

FIG. 2

3/3

FIG.3